# EUROPEAN PATENT SPECIFICATION

(11) **EP 1 175 719 B1**
(45) Date of publication and mention of the grant of the patent: **19.05.2010**
(21) Application number: 00919474.7
(22) Date of filing: 17.03.2000
(51) Int. Cl.: H02H 11/00, F16P 3/00

(54) **SYSTEM FOR RELIABLE PREVENTION OF THE RESTARTING OF A MACHINE**
ANORDNUNG ZUR ZUVERLÄSSIGEN VERMEIDUNG VOM WIEDERANFAHREN EINER MASCHINE
SYSTEME ANTI-REDEMARRAGE SUR POUR MACHINE

(30) Priority: 15.04.1999 WO PCT/US99/08322
(43) Date of publication of application: 30.01.2002
(73) Proprietor: Pilz GmbH & Co.., 73760 Ostfildern (DE); Eaton Industies GmbH, 53115 Bonn (DE)
(72) Inventor: ANDERSON, William, Edward, Cincinnati, OH 45247 (US); WIRES, Donald, Louis, Loveland, OH 45140 (US); BEHRENS, Jurgen, D-53757 St. Augustin (DE); HOVINE, Claude, B-1390 Archennes (BE); MUSSELER, Gernot, D-53347 Alfter (DE); DICKHOFF, Rolf, D-73230 Kirchheim/Teck (DE); GRAF, Winfried, D-73732 Esslingen (DE); RATEY, Udo, D-73054 Fislingen/Fils (DE)
(74) Representative: Witte, Weller & Partner
(86) International application number: PCT/US2000/007300
(87) International publication number: WO 2000/064026

(56) References cited:
- EP-A- 0 600 311
- DE-A- 4 213 171
- US-A- 4 330 810
- US-A- 5 412 528

## Description

The invention relates to a system for the reliable prevention of the restarting of a machine.

For the protection of persons who work on equipment and machines or maintain them particular measures must be provided. There are various legal provisions which lay down the conditions for reliability functions. Widely disseminated is the use of repair switches which are intended to make individual parts of the machine or equipment power-free. However, these show failures even after 20,000 to 50,000 switching cycles and thus represent a potential risk.

In the case of production machines of larger dimensions the repair switches are disposed at points widely separated from one another. This leads to additional problems in monitoring since it cannot be insured that the component to be maintained is actually free of power. Motions causing danger must however be ruled out in the machine.

In US 5,412,528 discloses a safety disconnect system in accordance with the preamble of claim 1.

US 4,330,810 discloses a safety switching device having command keys for triggering movements of the machine gearing set-up operations. The command keys act on switching elements which are redundant to a control circuit for controlling normal machine operation.

DE 42 13 171 A1 discloses a safety circuit that provides a redundant logic for controlling safety relevant functions in addition to a primary control logic.

EP 0 600 311 A2 discloses a safety circuit for monitoring of safety devices, which safety circuit is easy adaptable to different functions by means of an exchangeable and programmable module.

It is the objective of the invention to provide for a system which reliably prevents the restarting of a machine and which also can be used in spatially extended equipment.

This objective is realized by a system according to claim 1. Preferred embodiments are subject matter of the subclaims.

here are provided according to the invention, at least one disconnect switch which is disposed at the site of the machine at which the machine power is to be switched off, where each disconnect switch issues a disconnect signal to switch off the machine power, a power supply unit connected between the main switch of the main power circuit and the machine, where the main switch is at the power supply input of the power supply unit, and its power output is connected to the machine which maintains the supply of power to the machine interrupted by means of a power connection apparatus if at least one disconnect switch issues a disconnect signal, where a power monitoring apparatus checks the power output of the power supply unit for a voltage-free status, and the power connections apparatus which only permits a restart of the machine when none of the disconnect switches are issuing a disconnect signal; a control unit with a predetermined number of inputs for disconnect switches, or, if necessary, a collection and distribution unit, either of which reports the presence of a disconnect signal at one of its inputs to the power supply unit and receives the status of the power monitoring apparatus of the power supply unit and when the power-free status is reported issues a verification message to the disconnect switch which has supplied the disconnect signal; and, in case the number of disconnect switches is greater than the number of inputs of the control unit, at least one collection and distribution unit which has a predetermined number of inputs for disconnect switches or for an additional collection and distribution unit where at its output a disconnect signal is issued when a disconnect signal is present at one or more inputs.

The system according to the invention is used in particular for the prevention of an unexpected restart of the machine in whose main power circuit it is installed. Therein the power-free status of the power supply output of the system is verified visually. The system is configured so that it is flexible, thus being able to be used in the most various types or sizes of machines. Technical aspects and safety aspects were taken into account therein so that the installation can be carried out in practically every country in the world.

The system according to the present invention is not intended to switch off the system under load, it is not intended to be used as an Emergency Off switch, and it is not intended to be in the position by itself to permit the machine to start up. It is also not intended to replace a main switch. The machine must have its own Start/Stop commands so that an automatic Start is ruled out if the system according to the invention shows power at the power supply output. The system described in this invention, however, will not allow reclosure of the power connection apparatus if a fault is detected until the fault is cleared.

It is possible that individual machine components continue to be excluded from this safety system. This can relate, for example, to heating devices for adhesives and the like whose switching off may destroy parts of its equipment.

In principle forming the power supply unit and the control unit as an integrated component could be provided but as a rule they will be separate components.

The switch-off system of the invention thus comprises four different modules:
- disconnect switches which offer the possibility to the operators of safely switching off the electrical power from the machine before they begin their work in a dangerous environment. These switches issue a disconnect signal and receive the (preferably visually displayed) verification of the power-free status,
- collection and distribution units that collect and concentrate information from the disconnect switches or additional collection and distribution units. For this purpose a unit of this type preferably has a safety device with expansion modules for the transmission of the disconnect signals. The collection and distribution units also transmit the verification signal to the disconnect switch which has issued the disconnect signal.
- a control unit which is used as the interface between the power supply unit and the collection and distribution units as well as to the disconnect switches. It is also responsible for the supply of power to the collection and distribution units and the verification message and includes the functionality of a collection and distribution unit. Preferably a monitoring relay, which receives the message concerning the status of the power monitoring apparatus of the power supply unit PB, as well as having a safety circuit which transmits the verification message concerning the power-free status of the power monitoring apparatus to the disconnect switches DS, is provided, more preferably a stabilized DC power source for the monitoring relay, the safety device in the control unit and for the safety device in the collection and distribution units, a non-stabilized DC power source for the verification circuit, and an insulation monitoring circuit for monitoring the insulation between lines which are held at the potential of the stabilized DC power source and lines which are held at the potential of the non-stabilized DC power source,
- a power supply unit which transmits or disconnects the power for the machine or equipment though the power connection apparatus, a power monitoring apparatus, a control power supply source and, more preferably, a "four-relay" safety circuit.

The control unit as well as the collection and distribution units are the same for all forms of embodiment of the system according to the invention in whatever machine or equipment they are used. The monitoring is done practically independently of the size of the machine since the main circuits only run in the power supply unit.

The minimal configuration of a system according to the invention includes the power supply unit, the control unit, and as well as at least one disconnect switch. The maximal configuration will depend on the number of disconnect switches required as well as on the distance of each collection and distribution unit as well as of each disconnect switch from the control unit.

In normal operation all disconnect switches are closed, that is, none of them issues a disconnect signal. Now if it is intended to provide for a reliable switch-off, the machine must first be stopped. This can, for example, happen through the agency of software by which a stop command is used by the machine. The operator who must work in an area will then switch the corresponding disconnect switch and lock it in the open position. Thereby a disconnect signal is issued which is provided to the power supply unit. On occurrence of the signal it will be checked according to set criteria whether the output of the power supply unit is power-free. When and only when this power-free status is actively confirmed will a verification display on the disconnect switch which has the disconnect signal light up and verify the power-free status. Only then may operators enter into the corresponding area of the machine. As soon as they have finished their work, they will unlock the disconnect switch and once again turn on the equipment. The verification display shuts itself off.

If all the disconnect switches are switched on, the supply of power to the machine is restored and it can be restarted via the Start command.

In the following the invention is to be explained with the aid of the accompanying drawings. Shown are:
Figure 1 an example of a configuration of a system according to the present invention,
Figure 2 a schematic representation of a power supply unit PB,
Figure 3 a schematic representation of a control unit CB,
Figure 4 a schematic representation of a collection and distribution unit MB,

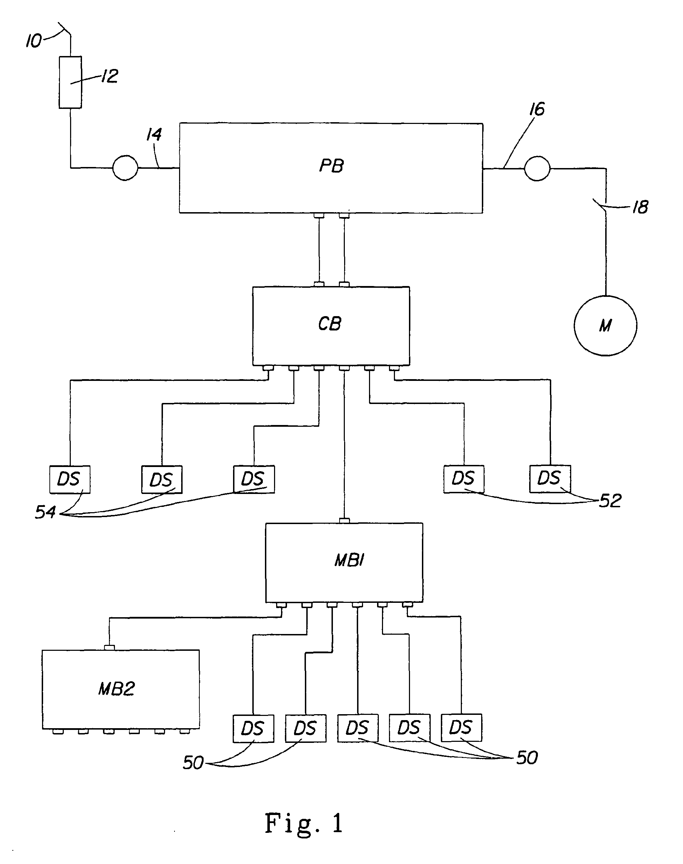

Figure 1 shows a configuration of the system according to the invention with which a machine can be provided which can be switched off at ten sites or machine parts.

Accordingly ten disconnect switches DS are provided. Of the ten disconnect switches DS a first set designated by 50 of disconnect switches DS is conducted to a collection and distribution unit MB1. A sixth input connection of the collection and distribution unit MB1 is allocated to an additional collection and distribution unit MB2 at which once again outputs of disconnect switches could be placed, which however can also be reserved as an option. In a practical development a collection and distribution unit will have six input connections although expansions are also possible. Like the collection and distribution unit MB1 the control unit CB has six inputs of which once again five, taken together designated by 52, 54, are allocated to disconnect switches DS. A sixth input receives the information from the collection and distribution unit MB1. The collection and distribution units as well as the control unit act as concentrators of signals which come from a lower level of the system. They must be disposed so that the drop in voltage between them is minimized and the entire cable length which is required for the connections between the disconnect switches and the power supply unit is optimized. The control unit CB also forms the interface to the power supply unit PB. The power supply unit PB is connected into the main circuit of the equipment or machine. Therein the main switch 10 of the main circuit is secured with a fuse 12 which is at the input 14 of the power supply unit PB. The output 16 of the power supply unit is connected to an additional machine switching device 18 at which the machine M lies. The switching device 18 serves for starting/stopping the machine.

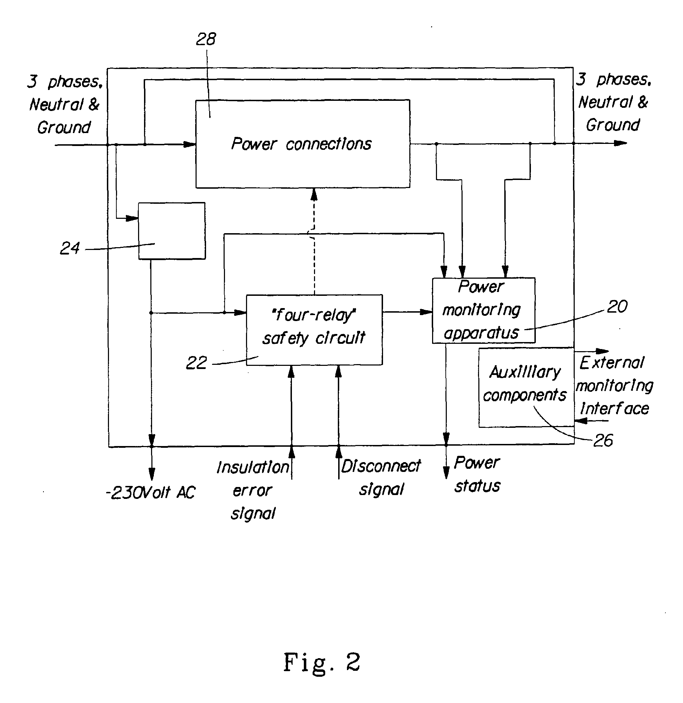

The Figures 2 to 4 are highly schematized block circuit images of the individual components among themselves.

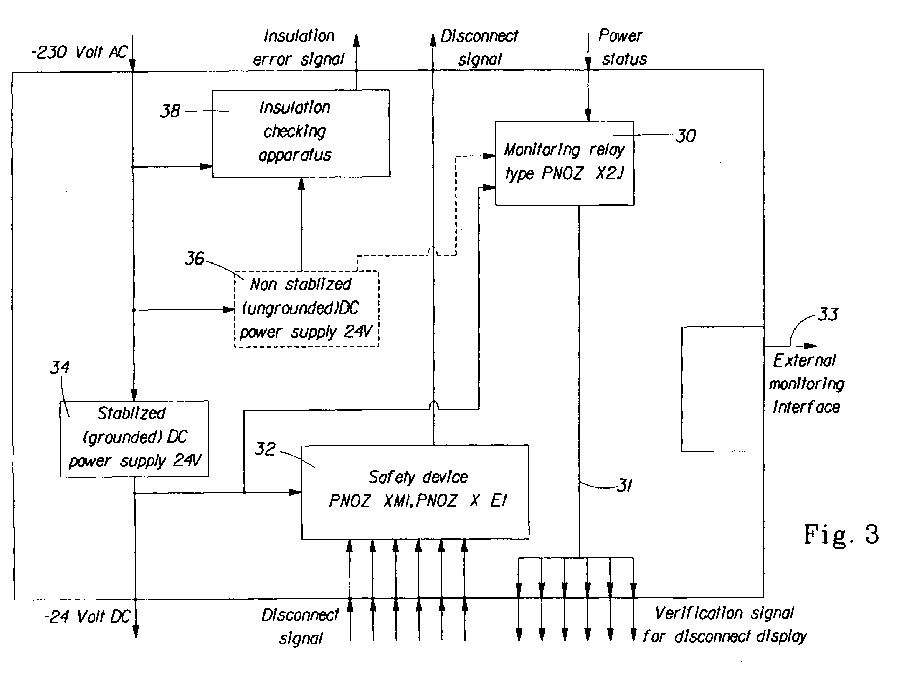

Figure 2 shows in a schematic manner the internal structure of the power supply unit PB. A so-called "four-relay" safety circuit 22, which represents an expanded Emergency Stop switch-off for three phases and alternatively for three phases and a neutral line, has direct access to the power connections apparatus 28. It is the object of the German Patent Application 199 15 234.0 filed in the German Patent Office on April 3, 1999. Another example for an Emergency Stop circuit arrangement is given in DE 196 41 516 C1. The safety circuit 22 reacts to a dual channel disconnect signal and/or to a single channel signal which reports an insulation error, both signals are supplied by the control unit CB (Figure 3). The power supply unit PB contains furthermore as power monitoring apparatus 20 a safety relay of the type PU3Z of the firm Pilz GmbH & Co. which monitors the power status of the power supply output. Thereby it works as a threshold value circuit and recognizes a phase as power-free if the phase voltage does not exceed a threshold value of 10V relative to the zero line. Provided in addition is a transformer 24 with 230 volt AC power at the output which supplies control power, for the components of the power supply unit, and to the control unit CB (Figure 3). Dual channel connections are provided to a monitoring relay of the control unit (Figure 3). Via these the information concerning the power status of the power monitoring apparatus 20 is transmitted, if a disconnect signal is also reported and additional safety criteria are fulfilled. Auxiliary components 26 which are necessary for the proper operation of the power supply unit are not represented in detail, likewise the necessary protective apparatus for the components. Additional connections can be provided for connection to the equipment, likewise connections for a status display as well as a reset switch in the control unit CB.

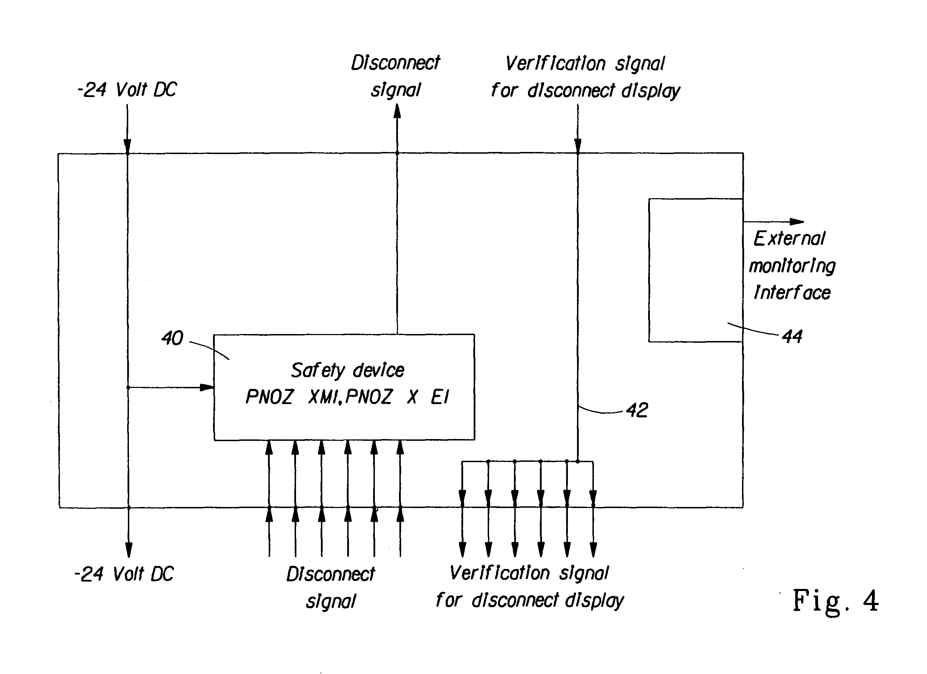

Figure 3 shows in a schematic manner the layout of a control unit CB. The control unit contains a monitoring relay 30 which receives the status of the power monitoring apparatus 20 of the power supply unit PB (Figure 2). The monitoring relay 30 is, for example, of the type PNOZx2.1 and is also distributed by Pilz GmbH & Co. The control unit further includes a stabilized DC power source 34 with 24 V for a safety device 32 and monitoring relay 30. The control unit further includes a non-stabilized DC power source 36 with 24 V that is controlled by the monitoring relay 30 which, depending on the status of the power monitoring apparatus (Figure 2), provides for the verification displays on the disconnect circuits connected via the corresponding circuit 31 being lit up or not. So that an erroneous lighting up of these displays is avoided, an insulation checking apparatus 38 is placed between the non-stabilized DC power 24 V lines. This communicates whether the two 24 V circuits are correctly separated from one another, i.e., there are no isolation defects. If an error is recognized, the restart of the SLS is disabled until the insulation checking apparatus 38 is reset. The reset switch of the control unit CB will be able to reset the insulation checking apparatus 38 only if the insulation fault has disappeared. Additional testing apparatuses within the control unit and for the supply lines can be provided. The control unit has six input connections whose present signals are processed in the safety device 32 as in a collection and distribution unit (Figures 4). The result of the processing is given as a dual channel disconnect signal to the four-relay safety circuit 22 (Figure 2). Conversely dual channel connections serve as connection of the monitoring relay 30 to the power monitoring apparatus of the power unit, e.g. connection power status (Figures 2 and 3). Two signal lamps are provided, one which lights up if the system is ready to operate, the other if one of the disconnect switches is open. Additional connections for the connection to the machine can be provided. Via an interface 33 the external monitoring is possible.

Figure 4 shows the schematic layout of a collection and distribution unit MB. Like the control unit it has six inputs as well as an output for disconnect signals. A safety device 40, which, for example, can be configured from safety relays with expansion modules according to need, processes the disconnect signals and passes the result to the next step of the system. Conversely the collection and distribution unit also provides for the verification signals being supplied to the corresponding disconnect circuits via circuits 42 provided therefor connecting the corresponding disconnect signal lamp. As an example safety device, a relay PNOZXM1 is suitable which is provided with expansion modules PNOZXE1, both once again by Pilz GmbH & Co. Via an interface 44 external monitoring is possible.

Preferably by the redundant design of the system according to the invention an increased reliability is achieved. Over the entire system a two-channel interrogation is done, for example of the status of the disconnect signal, in particular the "four-relay" safety circuit in the power supply unit has a double channel input.

## Claims

1. A system for reliable prevention of unexpected start-up of a machine (M), comprising:
- a power supply unit (PB) connected between a main switch (10) of a main power circuit of the machine (M) and the machine (M), wherein said main switch (10) is at the input (14) of said power supply unit (PB), and the output (16) of said power supply unit (PB) is connected to the machine (M), said power supply unit (PB) including a power connection apparatus (28) through which it transmits or disconnects the power for the machine (M),
- a control unit (CB) with a predetermined number of inputs forming an interface to the power supply unit (PB),
- at least one disconnect switch (DS) disposed at the site of the machine (M) and connected to one of said predetermined number of inputs, said at least one disconnect switch (DS) issuing a disconnect signal upon being switched by an operator,
- said control unit (CB) reports the presence of a disconnect signal at one of its inputs to said power supply unit (PB),
- said power supply unit (PB) interrupts the power to the machine (M) if at least one disconnect switch (DS) issues a disconnect signal,
**characterized in that**
- said power supply unit (PB) includes a power monitoring apparatus (20) which checks the power output (16) of said power supply unit (PB) for a power-free status,
- said power connection apparatus (28) only permits a restart of the machine (M) when none of the disconnect switches (DS) is issuing said disconnect signal,
- said control unit (CB) receives the status of the power monitoring apparatus (20) of said power supply unit (PB) and, when the power-free status is reported, issues a verification message to the disconnect switch (DS) which has supplied said disconnect signal, and
- said verification message is permitted to be displayed only at each disconnect switch (DS) which issues a disconnect signal.

2. The system of claim 1, **characterized in that** each disconnect switch (DS) has a signal lamp for the display of said verification message.

3. The system of any of claims 1 or 2, **characterized in that** said control unit (CB) has a monitoring relay (30) which receives the message concerning the status of the power monitoring apparatus (20) of said power supply unit (PB) as well as a verification display circuit (31) which transmits the verification message concerning power-free status of said power monitoring apparatus (20) to the corresponding disconnect switches (DS).

4. The system of any of claims 1 to 3, **characterized by**
- a stabilized DC power source (34) for the monitoring relay
- a non-stabilized DC power source (36) for the verification circuit and
- an insulation checking apparatus (38) for monitoring the insulation between lines which are maintained at the potential of the stabilized (insulated from ground) DC power source (34) and lines which are maintained at the potential of the non-stabilized (one line grounded) DC power source (36).

5. The system of any of claims 1 to 4, **characterized in that** all disconnect signal lines are designed as dual-channel lines.

## Patentansprüche

1. System für ein betriebssicheres Verhindern eines unerwarteten Anfahrens einer Maschine (M), mit:
- einer Energieversorgungseinheit (PB), die zwischen einem Hauptschalter (10) eines Hauptenergiekreises der Maschine (M) und der Maschine (M) angeschlossen ist ist, wobei der genannte Hauptschalter (10) mit dem Eingang (14) der besagten Energieversorgungseinheit (PB) verbunden ist, und der Ausgang (16) der besagten Energieversorgungseinheit (PB) mit der Maschine (M) verbunden ist, wobei die besagte Energieversorgungseinheit (PB) eine Energieverbindungsvorrichtung (28) besitzt, durch die sie die Energie für die Maschine (M) überträgt oder diese abschaltet,
- einer Steuereinheit (CB) mit einer vorbestimmten Anzahl an Eingängen, die eine Schnittstelle zu der Energieversorgungseinheit (PB) bilden,
- mindestens einem Trennschalter (DS), der am Ort der Maschine (M) angeordnet und mit einer der genannten, vorbestimmten Anzahl an Eingängen verbunden ist, wobei der genannte, mindestens eine Trennschalter (DS) ein Trennungssignal ausgibt, wenn er durch einen Anwender geschaltet wird,
- wobei die genannte Steuereinheit (CB) das Vorhandensein eines Trennungssignals an einer ihrer Eingänge an die genannte Energieversorgungseinheit (PB) meldet,
- wobei die genannte Energieversorgungseinheit (PB) die Energie zu der Maschine (M) unterbricht, wenn mindestens ein Trennschalter (DS) ein Trennungssignal ausgibt,
**dadurch gekennzeichnet, dass**
- die besagte Energieversorgungseinheit (PB) eine Energieüberwachungsvorrichtung (20) besitzt, die den Energieausgang (16) der genannten Energieversorgungseinheit (PB) auf einen energiefreien Status hin überprüft,
- die genannte Energieverbindungsvorrichtung (28) nur einen Neustart der Maschine (M) zulässt, wenn keiner der Trennschalter (DS) das genannte Trennungssignal ausgibt,
- die genannte Steuereinheit (CB) den Status der Energieüberwachungsvorrichtung (20) der genannten Energieversorgungseinheit (PB) empfängt und, wenn der energiefreie Status gemeldet wird, eine Bestätigungsnachricht an den Trennschalter (DS) ausgibt, der das Trennungssignal bereitgestellt hat, und
- die Darstellung der genannten Bestätigungsnachricht nur an den Trennschaltern (DS) zugelassen werden, die ein Trennungssignal ausgeben.

2. System nach Anspruch 1, **dadurch gekennzeichnet, dass** jeder Trennschalter (DS) eine Signallampe für die Darstellung der genannten Bestätigungsnachricht aufweist.

3. System nach einem der Ansprüche 1 oder 2, **dadurch gekennzeichnet, dass** die genannte Steuereinheit (CB) ein Überwachungsrelais (30) aufweist, das die Nachricht empfängt, die den Status der Energieüberwachungsvorrichtung (20) von der genannten Energieversorgungseinheit (PB) empfängt, sowie einen Bestätigungsdarstellungsschaltkreis (31) aufweist, der die Bestätigungsnachricht an die entsprechenden Trennschalter (DS) übermittelt, die den energiefreien Status betrifft.

4. System nach einem der Ansprüche 1 bis 3, **gekennzeichnet durch**
- eine stabilisierte Gleichstromquelle (34) für das Überwachungsrelais,
- eine nicht stabilisierte Gleichstromquelle (36) für den Bestätigungsschaltkreis und
- eine Isolationsüberwachungsvorrichtung (38) für ein Überwachen der Isolation zwischen Leitungen, die auf dem Potential der stabilisierten Gleichstromquelle (34) (isoliert von einer Erdung) gehalten werden und Leitungen, die auf dem Potential der nicht stabilisierten Gleichstromquelle (einpolig geerdet) gehalten werden.

5. System nach einem der Ansprüche 1 bis 4, **dadurch gekennzeichnet, dass** alle Trennungssignalleitungen als Dualkanalleitungen ausgebildet sind.

## Revendications

1. Système pour la prévention fiable d'un démarrage inattendu d'une machine (M), comprenant :
- une unité d'alimentation électrique (PB) raccordée entre un interrupteur principal (10) d'un circuit d'alimentation principal de la machine (M) et la machine (M), dans laquelle ledit interrupteur principal (10) est à l'entrée (14) de ladite unité d'alimentation électrique (PB), et la sortie (16) de ladite unité d'alimentation électrique (PB) est raccordée à la machine (M), ladite unité d'alimentation électrique (PB) comprenant un appareil de raccordement d'alimentation électrique (28) à travers lequel elle transmet ou déconnecte l'alimentation de la machine (M),
- une unité de commande (CB) avec un nombre prédéterminé d'entrées formant une interface avec l'unité d'alimentation électrique (PB),
- au moins un sectionneur (DS) disposé sur le site de la machine (M) et raccordé à une entrée dudit nombre prédéterminé d'entrées, ledit au moins un sectionneur (DS) émettant un signal de sectionnement quand il est commuté par un opérateur,
- ladite unité de commande (CB) rapporte la présence d'un signal de sectionnement au niveau de l'une de ses entrées à ladite unité d'alimentation électrique (PB),
- ladite unité d'alimentation électrique (PB) interrompt l'alimentation de la machine (M) si au moins un sectionneur (DS) émet un signal de sectionnement,
**caractérisé en ce que :**
- ladite unité d'alimentation électrique (PB) comprend un appareil de contrôle d'alimentation électrique (20) qui contrôle la puissance de sortie d'alimentation électrique (16) de ladite unité d'alimentation électrique (PB) pour un état sans alimentation électrique,
- ledit appareil de raccordement d'alimentation électrique (28) permet seulement un redémarrage de la machine (M) quand aucun des sectionneurs (DS) n'émet ledit signal de sectionnement,
- ladite unité de commande (CB) reçoit l'état de l'appareil de contrôle d'alimentation électrique (20) de ladite unité d'alimentation électrique (PB) et, quand l'état sans alimentation électrique est rapporté, envoie un message de vérification au sectionneur (DS) qui a fourni ledit signal de sectionnement, et
- ledit message de vérification peut être affiché seulement à chaque sectionneur (DS) qui émet un signal de sectionnement.

2. Système selon la revendication 1, **caractérisé en ce que** chaque sectionneur (DS) comprend une lampe témoin pour l'affichage dudit message de vérification.

3. Système selon l'une quelconque des revendications 1 ou 2, **caractérisé en ce que** ladite unité de commande (CB) comporte un relais de contrôle (30) qui reçoit le message concernant l'état de l'appareil de contrôle d'alimentation électrique (20) de ladite unité d'alimentation électrique (PB) ainsi qu'un circuit d'affichage de vérification (31) qui transmet le message de vérification concernant l'état sans alimentation électrique dudit appareil de contrôle d'alimentation électrique (20) aux sectionneurs (DS) correspondants.

4. Système selon l'une quelconque des revendications 1 à 3, **caractérisé par** :
- une source d'alimentation électrique CC (34) stabilisée pour le relais de contrôle ;
- une source d'alimentation électrique CC (36) non stabilisée pour le circuit de vérification ; et
- un appareil de contrôle d'isolation (38) pour contrôler l'isolation entre les lignes qui sont maintenues au potentiel de la source d'alimentation électrique CC (34) stabilisée (isolée de la terre) et les lignes qui sont maintenues au potentiel de la source d'alimentation électrique CC (36) non stabilisée (une ligne mise à la terre).

5. Système selon l'une quelconque des revendications 1 à 4, **caractérisé en ce que** toutes les lignes de signal de sectionnement sont conçues comme des lignes à double canal.
